# EUROPÄISCHE PATENTSCHRIFT

(11) **EP 3 350 050 B1**
(45) Veröffentlichungstag und Bekanntmachung des Hinweises auf die Patenterteilung: **20.02.2019**
(21) Anmeldenummer: 16793874.5
(22) Anmeldetag: 09.11.2016
(51) Int. Cl.: B60W 30/12, B60W 40/04, B60W 30/10

(54) **VERFAHREN ZUM BEREITSTELLEN EINER SPURINFORMATION EINER FAHRSPUR UND SYSTEM**
METHOD FOR PROVIDING TRACK INFORMATION ON A VEHICLE TRACK, AND SYSTEM
PROCÉDÉ DE FOURNITURE D'UNE INFORMATION DE VOIE RELATIVE À UNE VOIE DE CIRCULATION ET SYSTÈME

(30) Priorität: 12.11.2015 DE 102015014651
(43) Veröffentlichungstag der Anmeldung: 25.07.2018
(73) Patentinhaber: Audi AG, 85045 Ingolstadt (DE)
(72) Erfinder: SOFRA, Nikoletta, 85049 Ingolstadt (DE); BURCZYK, Artur, 85057 Ingolstadt (DE); RÜHRSCHNECK, Simon, 85080 Gaimersheim (DE)
(86) Internationale Anmeldenummer: PCT/EP2016/077034
(87) Internationale Veröffentlichungsnummer: WO 2017/081035

(56) Entgegenhaltungen:
- DE-A1-102008 003 666
- DE-A1-102013 019 112
- US-A1- 2014 129 073
- US-B1- 8 880 272

## Beschreibung

Die Erfindung betrifft ein Verfahren zum Bereitstellen einer Spurinformation einer Fahrspur eines Kraftfahrzeugs. Es wird, während das Kraftfahrzeug auf der Fahrspur bewegt wird, eine Fahrtrajektorie des Kraftfahrzeugs bezüglich eines fahrzeugexternen Bezugssystems bestimmt. Die Erfindung betrifft auch ein System mit zumindest einem Kraftfahrzeug zum Bestimmen einer Fahrtrajektorie des Kraftfahrzeugs auf einer Fahrspur.

Verfahren zum Bereitstellen einer Spurinformation einer Fahrspur sind aus dem Stand der Technik bekannt. So beschreibt die DE 10 2006 038 018 A1 ein Verfahren zur Fahrerassistenz durch Erzeugung von Spurinformation zur Unterstützung oder zum Ersatz von Spurinformation einer videobasierten Spurinformationseinrichtung. Eine von der Spurinformationseinrichtung erhaltene laterale Spurinformation wird basierend auf unmittelbar von vorausfahrenden Fremdfahrzeugen empfangenen navigationssystembasierten, lateralen Spurinformationen in Abhängigkeit von ermittelten Zuverlässigkeitsparametern ersetzt.

Aus der US 2014/0324334 A1 sind ein Informationsverarbeitungssystem und ein entsprechendes Verfahren bekannt. Dabei werden eine Streckenführung betreffende Informationen von einem ersten Fahrzeug erfasst und an einen Zentralserver übermittelt. Die von dem Zentralserver gesammelten Informationen werden einem zweiten Fahrzeug bereitgestellt, welches anhand dieser die Streckenführung durchführt. Dabei können etwa Weginformationen des zweiten Fahrzeugs mit einer Trajektorie des ersten Fahrzeugs verglichen werden. Weiterhin kann es vorgesehen sein, dass von einer Mehrzahl von Fahrzeugen entsprechende Datensätze an den Zentralserver übermittelt werden, wobei dann serverseitig oder fahrzeugseitig ein Datensatz ausgewählt wird, aus dem Informationen für die Streckenführung extrahiert werden. Aus der US 2001/0023380 A1 ist eine Vorrichtung zur automatischen Steuerung eines Fahrzeugs bekannt. Mittels einer steuerbaren Lenkeinheit und eines steuerbaren Antriebs kann dabei das Fahrzeug entlang eines vorgegebenen Pfades gesteuert werden. Entsprechende Pfadinformationen können eine Position, eine Orientierung und eine Geschwindigkeit des Fahrzeugs umfassen und durch entsprechende Erfassungseinrichtungen des Fahrzeugs gesammelt werden. Anhand dieser Pfadinformationen kann ein Pfad berechnet werden, entlang dessen das Fahrzeug gesteuert werden soll. Die Pfadinformationen können etwa von einer Servereinrichtung bereitgestellt werden.

Aus der US 2006/0217884 A1 sind ein Verfahren und eine Vorrichtung zum Übermitteln einer Trajektorie eines Fahrzeugs an eine Servereinrichtung bekannt. Die Trajektorie wird dabei fahrzeugseitig unter Verwendung entsprechender Erfassungseinrichtungen, etwa zur Bestimmung einer Position des Fahrzeugs, bestimmt, wobei eine segmentweise Abtastung des zurückgelegten Weges vorgesehen ist. Eine Segmentlänge kann abhängig sein von einem Straßenverlauf. Um die zu übermittelnde Datenmenge möglichst gering zu halten, sind eine fahrzeugseitige Kodierung und eine serverseitige Dekodierung der übermittelten Daten vorgesehen.

Die DE 10 2013 012 324 A1 beschreibt ein Verfahren zur automatischen Fahrwegfindung für ein Ego-Fahrzeug. Es werden Positionsangaben eines vorausfahrenden Fahrzeugs empfangen, und anhand der empfangenen Positionsangaben wird ein Fahrweg konstruiert.

In der DE 10 2013 019 112 A1 wird ein Verfahren zum Betreiben eines Fahrerassistenzsystems für ein Kraftfahrzeug offenbart. Das Fahrerassistenzsystem umfasst eine Überwachungseinrichtung, die dazu ausgelegt ist, von einer Empfangseinheit Datenpakete mit Positionsdaten von auf einer Straße fahrenden Fremdfahrzeugen zu empfangen. Auf der Grundlage der in den Datenpaketen enthaltenen Positionsdaten wird ein Spurverlauf für eine Fahrspur der Straße ermittelt. Anhand des Spurverlaufs wird ein Steuersignal zur Unterstützung beim Führen des Kraftfahrzeugs ausgegeben.

Es ist Aufgabe der Erfindung, ein Verfahren sowie ein System bereitzustellen, mit welchem die Sicherheit im Straßenverkehr erhöht werden kann. Diese Aufgabe wird erfindungsgemäß durch ein Verfahren sowie durch ein System mit den Merkmalen gemäß den jeweiligen unabhängigen Ansprüchen gelöst.

Bei einem erfindungsgemäßen Verfahren wird eine Spurinformation einer Fahrspur eines jeweiligen Kraftfahrzeugs bereitgestellt. Es wird, während das Kraftfahrzeug auf der Fahrspur bewegt wird, eine Fahrtrajektorie des Kraftfahrzeugs bezüglich eines fahrzeugexternen Bezugssystems bestimmt. Ein wesentlicher Gedanke der Erfindung ist darin zu sehen, dass eine Mehrzahl von Fahrtrajektorien einer Mehrzahl von Kraftfahrzeugen bestimmt und diese Fahrtrajektorien an eine fahrzeugexterne, insbesondere statische, zentrale Spurinformations-Sammeleinrichtung übermittelt werden. Die zumindest anhand der übermittelten Fahrtrajektorien bestimmte Spurinformation wird durch die Spurinformations-Sammeleinrichtung zumindest einem weiteren Kraftfahrzeug bereitgestellt.

Der Erfindung liegt die Erkenntnis zugrunde, dass die Spurinformation genauer und mit höherer Verfügbarkeit bereitgestellt werden kann, wenn diese durch die zentrale Spurinformations-Sammeleinrichtung bestimmt und über diesen Weg dann dem weiteren Kraftfahrzeug bereitgestellt wird. Das weitere Kraftfahrzeug kann mit der genaueren und öfter verfügbaren Spurinformation dann sicherer betrieben werden und als Folge wird die Sicherheit im Straßenverkehr erhöht.

So ist es vorgesehen, dass das Kraftfahrzeug, insbesondere manuell gesteuert von einem Fahrer des Kraftfahrzeugs, auf der Fahrspur bewegt wird. Die insbesondere von dem Fahrer gefahrene Fahrtrajektorie des Kraftfahrzeugs auf der Fahrspur wird bezüglich des fahrzeugexternen Bezugssystems aufgezeichnet. Dadurch kann dann die Fahrtrajektorie auf der Fahrspur zuverlässig bestimmt werden. Insbesondere kann die Fahrtrajektorie dadurch zuverlässig bei komplexer Verkehrsführung beziehungsweise bei einem komplexen Fahrspurverlauf bestimmt werden. So kann die Fahrtrajektorie Hinweise für den Fahrspurverlauf der Fahrspur bei Kurven, verbreiterten Fahrspuren oder fehlenden Spurmarkierungen geben. Bei den genannten Beispielen ist das Erkennen des genauen Fahrspurverlaufs mittels Assistenzsystemen des Kraftfahrzeugs oftmals ungenau und manchmal sogar unmöglich. Dadurch, dass die Fahrspur insbesondere manuell durch den Fahrer befahren wird, kann die von dem Fahrer gewählte Fahrtrajektorie als die Spurinformation genutzt werden. Anhand der Spurinformation können dann eine linke Fahrspurbegrenzung und eine rechte Fahrspurbegrenzung der Fahrspur bestimmt werden, insbesondere umfasst die Spurinformation eine querführungsrelevante Information für die laterale Bewegung des weiteren Kraftfahrzeugs auf der Fahrspur.

Die bestimmte Fahrtrajektorie wird dann an die fahrzeugexterne zentrale Spurinformations-Sammeleinrichtung übermittelt. Die zentrale Spurinformations-Sammeleinrichtung liegt beispielsweise als externer Server vor und ist insbesondere statisch. Das bedeutet, die zentrale Spurinformations-Sammeleinrichtung ist insbesondere unbeweglich und liegt nicht als Kraftfahrzeug vor. Vorteilhaft an der zentralen Spurinformations-Sammeleinrichtung ist, dass dort mehrere Fahrtrajektorien der Fahrspur von mehreren Kraftfahrzeugen gesammelt werden. Auch können die Fahrtrajektorien über einen Zeitraum von beispielsweise mehren Tagen in der Spurinformations-Sammeleinrichtung vorgehalten werden.

Die Spurinformation der Fahrspur wird dann anhand der Mehrzahl der Fahrtrajektorien bestimmt. Dadurch kann die Spurinformation besonders genau erzeugt werden. Die bestimmte Spurinformation wird dann durch die Spurinformations-Sammeleinrichtung weiteren Kraftfahrzeugen bereitgestellt. Das Bereitstellen an die weiteren Kraftfahrzeuge kann beispielsweise nach Anfrage der weiteren Kraftfahrzeuge oder vorzugsweise automatisch abhängig von deren geografischen Position und/oder deren wahrscheinlichsten Fahrtroute übertragen werden. Weiterhin kann die an das zumindest eine weitere Kraftfahrzeug übertragene Spurinformation dann zur Querführungssteuerung des weiteren Kraftfahrzeugs verwendet werden. Das weitere Kraftfahrzeug wird dann vorzugsweise zumindest semi-autonom, insbesondere vollständig autonom, betrieben.

Die Spurinformation kann einen Positionsstempel aufweisen, welcher entweder auf Basis eines globalen Koordinatensystems, beispielsweise WGS (World Geodetic System) oder auf Basis eines globalen Koordinatensystems einer Karte, beispielsweise einem UTM-Koordinatensystem (UTM - Universal Transverse Mercator), referenziert ist. Insbesondere umfasst die Spurinformation eine Fahrtrichtung der Fahrspur.

Insbesondere kann durch das Bestimmen der Fahrtrajektorie des Kraftfahrzeugs, während das Kraftfahrzeug auf der Fahrspur durch insbesondere den Fahrer bewegt wird, eine "In-the-loop"-Systemoptimierung durchgeführt werden. Das bedeutet, dass ein Fahrerassistenzsystem des Kraftfahrzeugs gleichzeitig betrieben wird, und die von dem Fahrerassistenzsystem angedachte zu befahrende Fahrtrajektorie mit der von dem Fahrer tatsächlich befahrenen Fahrtrajektorie verglichen wird. Dadurch können Unstimmigkeiten zwischen dem Systemverhalten und dem Fahrerverhalten gesammelt und analysiert werden.

Es ist vorgesehen, dass die Mehrzahl der Fahrtrajektorien an die Spurinformations-Sammeleinrichtung übermittelt wird, und die Spurinformation anhand der Mehrzahl der Fahrtrajektorien bestimmt wird. Die Mehrzahl der Kraftfahrzeuge liegt also insbesondere als Fahrzeugflotte vor und somit liegt die Mehrzahl der Fahrtrajektorien auch als Fahrzeugflottendaten vor. Durch das Vorliegen der Mehrzahl der Fahrtrajektorien in der Sammeleinrichtung kann die Spurinformation genauer bestimmt werden, als wenn lediglich die Fahrtrajektorie von einem einzigen Fahrzeug vorliegen würde. Es können beispielsweise fehlerhafte Fahrtrajektorien bestimmt und vom Bestimmen der Spurinformation ausgeschlossen werden. Weiterhin wird dadurch die Spurinformation insbesondere kontinuierlich angepasst. So ist die Spurinformation dadurch dann immer wieder auf dem aktuellen Stand, beispielsweise wenn sich eine Spurführung der Fahrspur ändert, beispielsweise durch Baustellen oder Umwelteinflüsse, welche beispielsweise die Fahrspur derart beschädigen können, so dass diese anders als ursprünglich vorgesehen geführt wird. Die Spurinformation wird also insbesondere anhand von über einen vorbestimmten Zeitraum gesammelten Fahrtrajektorien bestimmt. Dies ist bei bekannten Verfahren nicht möglich, wenn die Spurinformation in einem vorausfahrenden Fahrzeug bestimmt wird.

Es werden also Fahrtrajektorien mittels Fahrzeugen einer Fahrzeugflotte gesammelt, zu welchem auch das Kraftfahrzeug gehört, und an einer zentralen Stelle, also der fahrzeugexternen zentralen Spurinformationssammeleinrichtung, gesammelt und bearbeitet, um die Spurinformation bereitzustellen. Die Spurinformation wird dann dem zumindest einen weiteren Kraftfahrzeug zur Unterstützung bei zumindest der Querführung auf der Fahrspur bereitgestellt.

Vorzugsweise ist es vorgesehen, dass die Fahrtrajektorie des Kraftfahrzeugs auf der Fahrspur durch eine Lokalisierungseinheit des Kraftfahrzeugs bestimmt wird. Die Lokalisierungseinheit kann Sensordaten und/oder Kartendaten verwenden, um eine, insbesondere satellitengestützte, Lokalisierung zu verbessern. Die Lokalisierungseinheit des Kraftfahrzeugs kann beispielsweise ein globales Navigationssatellitensystem (GNSS) umfassen. So kann das fahrzeugexterne Bezugssystem beispielsweise auf dem WGS 84 (World Geodetic System 1984) basieren. Das globale Navigationssatellitensystem kann beispielsweise einen Empfänger für GPS (Global Positioning System), Glonass, Galileo und/oder Beidou umfassen. Die Lokalisierungseinheit kann beispielsweise als Navigationseinheit ausgebildet sein. Die Lokalisierungseinheit kann aber auch Umfeldsensoren des Kraftfahrzeugs umfassen. So können die Umfeldsensoren beispielsweise Landmarken in einem Umgebungsbereich des Kraftfahrzeugs auf der Fahrspur erkennen. Anhand der Landmarken kann dann die aktuelle Position des Kraftfahrzeugs verbessert werden. Als Landmarken kommen beispielsweise Verkehrsschilder in Betracht. Die Umfeldsensoren können beispielsweise als Kamera, Ultraschall, Radar oder Laserscanner ausgebildet sein. Vorteilhaft ist es also, dass die Fahrtrajektorie des Kraftfahrzeugs durch die Lokalisierungseinheit genauer bestimmt werden kann.

Weiterhin ist es vorzugsweise vorgesehen, dass die Fahrtrajektorie anhand eines Lenkwinkelverlaufs des Kraftfahrzeugs bestimmt wird. Der Lenkwinkelverlauf des Kraftfahrzeugs, während das Kraftfahrzeug auf der Fahrspur bewegt wird, kann beispielsweise mittels eines Lenkwinkelsensors des Kraftfahrzeugs bestimmt werden. Der Lenkwinkelverlauf hat den Vorteil, dass dieser nur in dem Kraftfahrzeug bestimmt wird und somit unabhängig von einem Umfeldsensor des Kraftfahrzeugs oder einem globalen Navigationssatellitensystem bestimmt werden kann. Dadurch kann der Lenkwinkelverlauf beispielsweise für eine detailliertere Beschreibung der Fahrtrajektorie genutzt werden.

Vorzugsweise ist es vorgesehen, dass beim Bestimmen der Fahrtrajektorie ein Zuverlässigkeitswert der Fahrtrajektorie auf Basis von Sensordaten des Kraftfahrzeugs, insbesondere im Kraftfahrzeug, bestimmt wird und die Spurinformation abhängig von dem Zuverlässigkeitswert bestimmt wird. Die Sensordaten können beispielsweise Auskunft über eine Positionsgenauigkeit der Fahrtrajektorie auf der Fahrspur zum Zeitpunkt der Erfassung der Fahrtrajektorie geben. Die Fahrtrajektorie wird dadurch zuverlässiger bestimmt.

In einer weiteren Ausführungsform ist es vorzugsweise vorgesehen, dass jeweils eine Fahrtrajektorie der Mehrzahl der Fahrtrajektorien mit den restlichen Fahrtrajektorien der Mehrzahl der Fahrtrajektorien verglichen wird, und anhand des Vergleichs ein weiterer Zuverlässigkeitswert der jeweiligen Fahrtrajektorie bestimmt wird. Durch den Vergleich der Fahrtrajektorien untereinander können beispielsweise grobe Ausreißer der Fahrtrajektorien bestimmt werden. Eine Fahrtrajektorie kann beispielsweise als grober Ausreißer vorliegen, wenn während des Erfassens der Fahrtrajektorie durch das Kraftfahrzeug eine fehlerhafte Positionsbestimmung in dem fahrzeugexternen Bezugssystem oder aber ein Umfeldsensor des Kraftfahrzeugs oder ein Lenkwinkelsensor des Kraftfahrzeugs fehlerhaft betrieben wird. Das Berücksichtigen einer fehlerhaften Fahrtrajektorie beim Bestimmen der Spurinformation würde dazu führen, dass die Spurinformation ungenau wird. Durch das Erkennen der fehlerhaften Fahrtrajektorie kann die Spurinformation genauer erzeugt werden. Das Bestimmen der fehlerhaften Fahrtrajektorie kann beispielsweise mittels eines RANSAC-Algorithmus (Random Sample Consensus) innerhalb der zentralen Spurinformations-Sammeleinrichtung bestimmt werden.

In einer weiteren Ausführungsform ist es vorzugsweise vorgesehen, dass eine Plausibilität der Spurinformation anhand von einem jeweiligen Lenkwinkel der Mehrzahl der Kraftfahrzeuge während des Bewegens auf der Fahrspur und/oder einer Spurmarkierungsanordnung einer die Fahrspur umfassende Straße und/oder einem jeweiligen Geschwindigkeitswert der Mehrzahl der Kraftfahrzeuge während des Bewegens auf der Fahrspur geprüft wird. Es kann also anhand der Mehrzahl der Kraftfahrzeuge eine Plausibilität der Spurinformation ermittelt werden. So kann jedes der Kraftfahrzeuge während des Bewegens auf der Fahrspur Informationen bereitstellen, um die Spurinformation zu plausibilisieren. Es können beispielsweise die Lenkwinkel der Mehrzahl der Kraftfahrzeuge und/oder der jeweilige Geschwindigkeitswert der Mehrzahl der Kraftfahrzeuge genutzt werden, um die Spurinformation zu plausibilisieren. Weiterhin kann von jedem der Kraftfahrzeuge der Mehrzahl der Kraftfahrzeuge eine Anordnung der Spurmarkierung der Straße, beispielsweise mit einem Kamerasystem, erfasst werden und zur Plausibilisierung der Spurinformation genutzt werden. So liegen zum einen verschiedene Typen von Informationen vor, um die Spurinformation zu plausibilisieren und zum anderen werden diese Typen von Informationen auch durch mehrere Kraftfahrzeuge bereitgestellt, wodurch die Zuverlässigkeit der Plausibilisierung weiterhin erhöht wird. Dadurch kann auch eine Unstimmigkeit zwischen Fahrerverhalten und Systemverhalten bestimmt werden.

Es ist vorgesehen, dass die Fahrtrajektorie zusammen mit einem Fahrertyp eines Fahrers des Kraftfahrzeugs und eventuell zusätzlich mit einem Wetterzustand in einem Umgebungsbereich des Kraftfahrzeugs während dem Bewegen des Kraftfahrzeugs auf der Fahrspur, bestimmt wird, und die Spurinformation einer Spurinformationskategorie einer Mehrzahl von vorbestimmten Spurinformationskategorien zugewiesen wird, wobei eine Spurinformation der jeweiligen Spurinformationskategorie dem weiteren Kraftfahrzeug situationsabhängig durch die Spurinformations-Sammeleinrichtung bereitgestellt wird. Dadurch wird
ein Clustering der Fahrtrajektorien für mehrere Spurinformationen mit verschiedenen Spurführungseigenschaften abhängig vom Fahrertyp und eventuell zusätzlich vom Wetterzustand ermöglicht. Dem weiteren Kraftfahrzeug wird die jeweilige Spurinformation dann situationsabhängig bereitgestellt. Die Situation kann von einem Fahrertyp eines Fahrers des weiteren Kraftfahrzeugs und/oder einem Wetterzustand in einem Umgebungsbereich des weiteren Kraftfahrzeugs abhängen. Die Spurinformation aus der jeweiligen Spurinformationskategorie kann beispielsweise auch manuell von dem weiteren Kraftfahrzeug ausgewählt werden.
Weiterhin kann es insbesondere vorgesehen sein, dass die Spurinformation dem weiteren Kraftfahrzeug abhängig von einer aktuellen Position des weiteren Kraftfahrzeugs im fahrzeugexternen Bezugssystem automatisch bereitgestellt wird, insbesondere die Spurinformation dem weiteren Kraftfahrzeug automatisch bereitgestellt wird, falls die Entfernung des weiteren Kraftfahrzeugs zu der Fahrspur kleiner als ein Entfernungsgrenzwert ist. So kann die Anfrage des weiteren Kraftfahrzeugs an die Spurinformations-Sammeleinrichtung bezüglich des Übermittelns der Spurinformation automatisch von dem weiteren Kraftfahrzeug abgegeben werden, falls die Entfernung des weiteren Kraftfahrzeugs zu der Fahrspur kleiner als der Entfernungsgrenzwert ist. Ergänzend oder alternativ kann die Spurinformation an das weitere Kraftfahrzeug auch abhängig von der wahrscheinlichsten Fahrtroute des weiteren Kraftfahrzeugs übertragen werden. Vorteilhaft ist, dass das weitere Kraftfahrzeug die Spurinformation mit wenig Aufwand erhält. Durch das Übermitteln der Spurinformation abhängig von der wahrscheinlichsten Fahrtroute kann das Datenvolumen bei der Übermittlung von Spurinformationen reduziert werden. So ist es dann beispielsweise nicht notwendig, sämtliche Spurinformationen der Fahrspuren aus dem Umgebungsbereich des Kraftfahrzeugs zu übermitteln, sondern lediglich diejenigen Spurinformationen zu den Fahrspuren, welche gemäß einer Wahrscheinlichkeitsberechnung von dem weiteren Kraftfahrzeug befahren werden. Dadurch kann zum einen die Übertragung der benötigten Spurinformation beschleunigt werden und zum anderen kann die Weiterverarbeitung der Spurinformation in dem weiteren Kraftfahrzeug aufgrund der niedrigeren Datenmenge schneller durchgeführt werden.

Insbesondere kann es vorgesehen sein, dass die Spurinformation für eine Querführung des weiteren Kraftfahrzeugs beim Fahren des weiteren Kraftfahrzeugs auf der Fahrspur berücksichtigt wird. Durch die Querführung beziehungsweise laterale Bewegungsführung des Kraftfahrzeugs auf der Fahrspur wird das Kraftfahrzeug innerhalb der Fahrspurbegrenzungen der Fahrspur gehalten. Die Berücksichtigung der Spurinformation kann beispielsweise dadurch erfolgen, dass ein Fahrerassistenzsystem in dem weiteren Kraftfahrzeug eine Warnung ausgibt, falls ein Überschreiten der Fahrspurbegrenzungen bevorsteht oder erfolgt ist. Jedoch kann das weitere Kraftfahrzeug auch zumindest semi-autonom betrieben werden, insbesondere autonom betrieben werden. So kann die Spurinformation genutzt werden, um das weitere Kraftfahrzeug autonom auf der Fahrspur innerhalb der Fahrspurbegrenzungen zu bewegen. Die Spurinformation für die Querführung des weiteren Kraftfahrzeugs ist insbesondere vorteilhaft bei Kurven, verbreiterten Fahrspuren oder fehlender Fahrspurmarkierungen der Fahrspur. Das weitere Kraftfahrzeug kann dadurch sicherer betrieben werden.

In einer weiteren Ausführungsform ist es vorzugsweise vorgesehen, dass das weitere Kraftfahrzeug abhängig von der Spurinformation zumindest semi-autonom, insbesondere autonom, hinsichtlich eines Lenkwinkels des weiteren Kraftfahrzeugs und/oder hinsichtlich einer Position des weiteren Kraftfahrzeugs auf der Fahrspur betrieben wird. So ist es insbesondere vorgesehen, dass das weitere Kraftfahrzeug pilotiert auf der Fahrspur gelenkt wird. Ein Beschleunigen oder Verzögern des weiteren Kraftfahrzeugs kann beispielsweise immer noch von dem Fahrer des weiteren Kraftfahrzeugs ausgeführt werden. Jedoch kann es beispielsweise Situationen geben, in denen der Fahrer die Fahrspurbegrenzungen der Fahrspur und somit den genauen Verlauf der Fahrspur nicht genau erkennen kann, beispielsweise bei schlechten Lichtverhältnissen oder aber extremen Witterungsverhältnissen, wie beispielsweise einer schneebedeckten Fahrspur oder auch wegen Müdigkeit des Fahrers. In diesem Fall kann der Fahrer durch das autonome Lenken des weiteren Kraftfahrzeugs abhängig von der Spurinformation beim Betreiben des weiteren Kraftfahrzeugs unterstützt werden. Die Sicherheit des weiteren Kraftfahrzeugs wird dadurch wiederum erhöht.

Die Erfindung betrifft auch ein System mit zumindest einem Kraftfahrzeug zum Bestimmen einer Fahrtrajektorie des Kraftfahrzeugs auf einer Fahrspur. Als ein wesentlicher Gedanke der Erfindung ist es vorgesehen, dass das System eine zentrale Spurinformations-Sammeleinrichtung umfasst, welche zum Empfangen einer Mehrzahl von bestimmten Fahrtrajektorien einer Mehrzahl von Kraftfahrzeugen, zum Erzeugen einer Spurinformation der Fahrspur anhand der Mehrzahl von Fahrtrajektorien und zum Bereitstellen der erzeugten Spurinformation für ein weiteres Kraftfahrzeug ausgebildet ist.

Die mit Bezug auf das erfindungsgemäße Verfahren vorgestellten bevorzugten Ausführungsformen und deren Vorteile gelten entsprechend für das erfindungsgemäße System.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Ausführungsbeispiele der Erfindung werden nachfolgend anhand schematischer Zeichnungen näher erläutert.

Dabei zeigen:
- Fig. 1: eine schematische Draufsicht eines Ausführungsbeispiels eines erfindungsgemäßen Kraftfahrzeugs auf einer Fahrspur; und
- Fig. 2: eine schematische Darstellung eines Systems mit einem Kraftfahrzeug, einer zentralen Spurinformations-Sammeleinrichtung und einem weiteren Kraftfahrzeug.

In den Figuren werden gleiche oder funktionsgleiche Elemente mit den gleichen Bezugszeichen versehen.

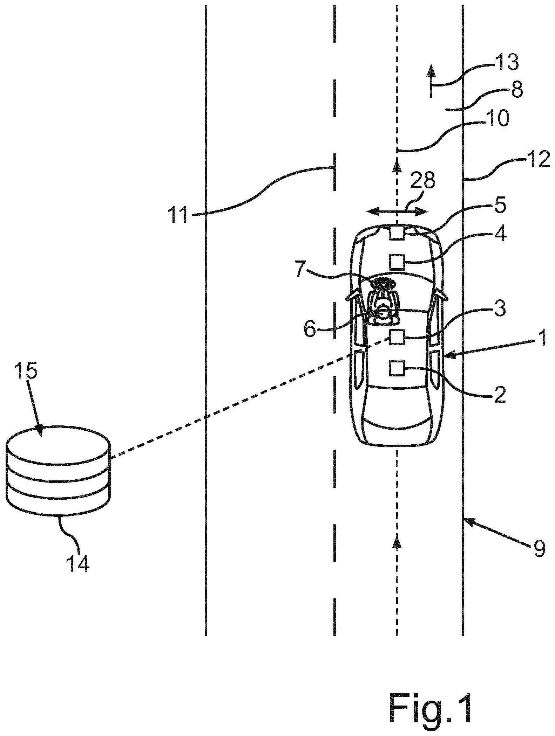

In Fig. 1 ist schematisch eine Draufsicht auf ein Kraftfahrzeug 1 dargestellt. Das Kraftfahrzeug 1 umfasst eine Lokalisierungseinheit 2, eine Kommunikationseinheit 3, einen Lenkwinkelsensor 4 und ein Umfelderfassungssystem 5. Mit der Lokalisierungseinheit 2 kann eine Position des Kraftfahrzeugs 1 in einem fahrzeugexternen Bezugssystem bestimmt werden. Das fahrzeugexterne Bezugssystem kann beispielsweise als WGS 84 vorliegen. Demnach umfasst die Lokalisierungseinheit 2 beispielsweise einen Empfänger eines globalen Navigationssatellitensystems. Die Kommunikationseinheit 3 ist zum Übermitteln von Information zu einer fahrzeugexternen Einrichtung, beispielsweise einem externen Server, ausgebildet. Die Übermittlung der Information geschieht insbesondere drahtlos, beispielsweise über ein mobiles Datenübertragungsverfahren, wie beispielsweise nach einem 3G- oder 4G-Standard. Der Lenkwinkelsensor 4 ist dazu ausgebildet, einen aktuellen Lenkwinkel des Kraftfahrzeugs 1 zu erfassen und vorzugsweise einen Lenkwinkelverlauf des Kraftfahrzeugs 1 zu bestimmen. Durch das Umfelderfassungssystem 5 können beispielsweise Landmarken im Umgebungsbereich des Kraftfahrzeugs 1 erfasst werden. Die Landmarken können beispielsweise als Verkehrsschild oder als vielfältiges markantes Objekt ausgebildet sein.

Das Kraftfahrzeug 1 wird gemäß dem Ausführungsbeispiel von einem Fahrer 6 gelenkt. Der Fahrer 6 kann das Lenken beispielsweise mit einem Lenkrad 7 des Kraftfahrzeugs 1 ausführen.

Das Kraftfahrzeug 1 wird auf einer Fahrspur 8 einer Straße 9 bewegt. Der Fahrer 6 bewegt das Kraftfahrzeug 1 entlang einer Fahrtrajektorie 10 des Kraftfahrzeugs 1. Die Fahrspur 8 weist eine linke Fahrspurbegrenzung 11 und eine rechte Fahrspurbegrenzung 12 auf. Weiterhin weist die Fahrspur 8 eine vorgesehene Regelfahrtrichtung 13 auf. Das Kraftfahrzeug 1 wird von dem Fahrer 6 in Regelfahrtrichtung 13 insbesondere derart auf der Fahrspur 8 gelenkt, dass die Fahrtrajektorie 10 innerhalb der linken Fahrspurbegrenzung 11 und der rechten Fahrspurbegrenzung 12 vorliegt.

Die Fahrtrajektorie 10 des Kraftfahrzeugs 1 wird in dem fahrzeugexternen Bezugssystem bestimmt und mittels der Kommunikationseinheit 3 an eine fahrzeugexterne zentrale Spurinformations-Sammeleinrichtung 14 übertragen. Die Spurinformations-Sammeleinrichtung 14 ist beispielsweise als externer Server mit einer Datenbank und einer Auswerteeinheit ausgebildet. Insbesondere ist die Spurinformations-Sammeleinrichtung 14 statisch ausgebildet und liegt nicht in Form eines beweglichen Objektes, insbesondere eines Kraftfahrzeugs, vor. Die Spurinformations-Sammeleinrichtung 14 ist dazu ausgebildet, mehrere Fahrtrajektorien 10 von unterschiedlichen Kraftfahrzeugen zu sammeln. In der Spurinformations-Sammeleinrichtung 14 wird abhängig von der Fahrtrajektorie 10 eine Spurinformation 15 der Fahrspur 8, insbesondere eine querführungsrelevante Information 28, erzeugt. Die Spurinformation 15 umfasst Information über die Fahrspur 8, insbesondere einen sicher befahrbaren Teil der Fahrspur 8. So kann durch die Spurinformation 15 beispielsweise eine ideale Fahrtrajektorie für die Fahrspur 8 bereitgestellt werden, bei welcher die linke Fahrspurbegrenzung 11 und die rechte Fahrspurbegrenzung 12 nicht überfahren werden.

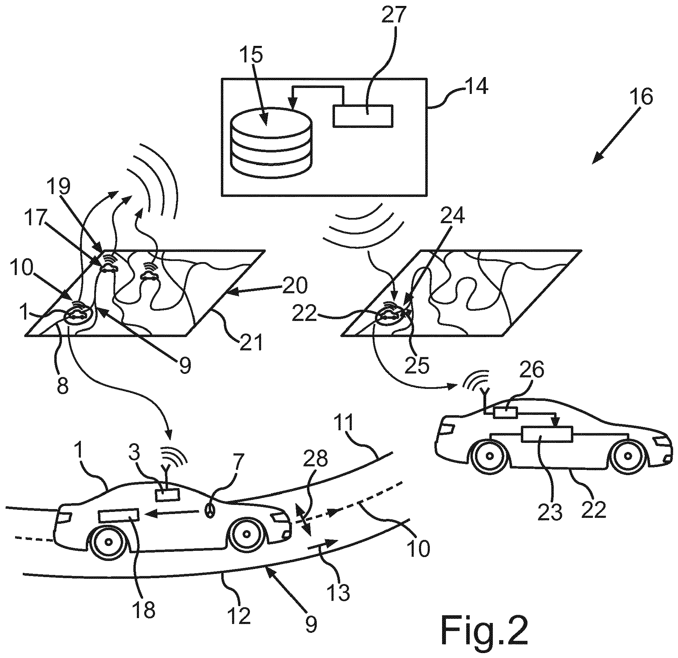

Fig. 2 zeigt ein System 16. Das System 16 umfasst das Kraftfahrzeug 1 und eine Mehrzahl von Kraftfahrzeugen 17. Das Kraftfahrzeug 1 weist ein Querführungssystem 18 auf, welches durch den Fahrer 6 mit dem Lenkrad 7 gesteuert wird. Anhand des Querführungssystems 18 wird die Fahrtrajektorie 10 auf der Fahrspur 8 bestimmt. Weiterhin wird durch die Mehrzahl der Kraftfahrzeuge 17 eine Mehrzahl von Fahrtrajektorien 19 der Fahrspur 8 bestimmt.

Die Fahrtrajektorie 10 sowie die Mehrzahl der Fahrtrajektorien 19 werden bezüglich eines fahrzeugexternen Bezugssystems 20 bestimmt. In dem fahrzeugexternen Bezugssystem 20 liegen die Fahrtrajektorie 10 und die Mehrzahl der Fahrtrajektorien 19 dann mit der Angabe einer globalen geographischen Position vor. Das Bezugssystem 20 kann beispielsweise als WGS 84 vorliegen. Anhand des Bezugssystems 20 können die Fahrtrajektorie 10 und/oder die Mehrzahl der Fahrtrajektorien 19 beispielsweise in eine Landkarte 21 übertragen werden.

Die Fahrtrajektorie 10 sowie die Mehrzahl der Fahrtrajektorien 19 werden an die Spurinformations-Sammeleinrichtung 14 übertragen. Von der Fahrtrajektorie 10 sind dann beispielsweise Informationen wie die Position des Kraftfahrzeugs 1, ein Sollkurs und ein Lenkwinkelverlauf des Kraftfahrzeugs 1 umfasst. Durch den Lenkwinkelverlauf kann bestimmt werden, wie der Fahrer 6 das Lenkrad 7 an einer jeweiligen Position des Kraftfahrzeugs 1 eingeschlagen hat.

Durch die an die Spurinformations-Sammeleinrichtung 14 übertragene Fahrtrajektorie 10 und die Mehrzahl der Fahrtrajektorien 19 wird dann die Spurinformation 15 der Fahrspur 8 bestimmt. Durch die Spurinformation 15 wird dann sozusagen eine ideale Fahrtrajektorie innerhalb der linken Fahrspurbegrenzung 11 und der rechten Fahrspurbegrenzung 12 bereitgestellt. Die Spurinformation 15 wird anhand der Fahrtrajektorie 10 und der Mehrzahl der Fahrtrajektorien 19 bestimmt. Dadurch kann ein Ausreißer beziehungsweise eine fehlerhafte Fahrtrajektorie bestimmt werden. Weiterhin kann die Spurinformation 15 dadurch genauer bestimmt werden.

Die Spurinformation 15 wird dann von der Spurinformations-Sammeleinrichtung 14 an ein weiteres Kraftfahrzeug 22 übermittelt. Das weitere Kraftfahrzeug 22 befindet sich beispielsweise auf der Fahrspur 8. Anhand der Spurinformation 15 kann ein Querführungssystem 23 des weiteren Kraftfahrzeugs 22 unterstützt werden. Durch das Querführungssystem 23 wird das weitere Kraftfahrzeug 22 auf der Fahrspur 8, also innerhalb der linken Fahrspurbegrenzung 11 und der rechten Fahrspurbegrenzung 12 gehalten. Das weitere Kraftfahrzeug 22 kann beispielsweise zumindest semi-autonom betrieben werden. So kann das weitere Kraftfahrzeug 22 automatisch durch das Querführungssystem 23 abhängig von der Spurinformation 15 gelenkt werden.

Das Bereitstellen der Spurinformation 15 für das weitere Kraftfahrzeug 22 kann beispielsweise abhängig von einer aktuellen Position 24 des weiteren Kraftfahrzeugs 22 im fahrzeugexternen Bezugssystem 20 erfolgen. So wird die Spurinformation 15 beispielsweise dem weiteren Kraftfahrzeug 22 automatisch bereitgestellt, falls eine Entfernung 25 des weiteren Kraftfahrzeugs 22 zu der Fahrspur 8 kleiner als ein Entfernungsgrenzwert ist. Ergänzend oder alternativ kann die Spurinformation 15 dem weiteren Kraftfahrzeug 22 abhängig von einer prognostizierten wahrscheinlichsten Fahrtroute des Kraftfahrzeugs 22 bereitgestellt werden. Das weitere Kraftfahrzeug 22 weist eine weitere Kommunikationseinheit 26 zum Empfangen der Spurinformation 15 auf.

Durch das Bereitstellen der in der Spurinformations-Sammeleinrichtung 14 genau anhand von der Mehrzahl der Fahrtrajektorien 19 und der Fahrtrajektorie 10 bestimmten Spurinformation 15 für das weitere Kraftfahrzeug 22 kann eine Querführung des weiteren Kraftfahrzeugs 22 auf der Fahrspur 8 zuverlässiger und genauer durchgeführt werden. Das weitere Kraftfahrzeug 22 kann dadurch, insbesondere bei autonomem Betrieb, sicherer betrieben werden. Die Spurinformation 15 wird beispielsweise mittels eine Auswerteeinheit 27 beziehungsweise eine Datenverarbeitungseinheit der zentralen Spurinformations-Sammeleinrichtung 14 bestimmt.

Insbesondere ist das Verfahren für den Betrieb des weiteren Kraftfahrzeugs 22 hilfreich, falls die Fahrspur 8 Kuppen oder fehlende Spurmarkierungen aufweist. Es wird dann beispielsweise ein auf einer Umfelderfassungseinrichtung des weiteren Kraftfahrzeugs 22 basierendes Querführungssystem 23 des weiteren Kraftfahrzeugs 22 durch die Spurinformation 15 unterstützt beziehungsweise ergänzt.

## Patentansprüche

1. Verfahren zum Bereitstellen einer Spurinformation (15) einer Fahrspur (8) eines jeweiligen Kraftfahrzeugs (1), bei welchem, während das Kraftfahrzeug (1) auf der Fahrspur (8) bewegt wird, eine Mehrzahl von Fahrtrajektorien (10, 19) einer Mehrzahl von Kraftfahrzeugen (17) bezüglich eines fahrzeugexternen Bezugsystems (20) bestimmt wird, wobei die Mehrzahl der Fahrtrajektorien (10, 19) an eine fahrzeugexterne zentrale Spurinformations-Sammeleinrichtung (14) übermittelt werden, die Spurinformation (15) zumindest anhand der Mehrzahl der Fahrtrajektorien (10, 19) bestimmt wird,
die bestimmte Spurinformation (15) durch die Spurinformations-Sammeleinrichtung (14) zumindest einem weiteren Kraftfahrzeug (22) bereitgestellt wird, die Spurinformation (15) einer Spurinformationskategorie einer Mehrzahl von vorbestimmten Spurinformationskategorien zugewiesen wird, und
eine Spurinformation (15) der jeweiligen Spurinformationskategorie dem weiteren Kraftfahrzeug (22) situationsabhängig durch die Spurinformations-sammeleinrichtung (14) bereitgestellt wird,
**dadurch gekennzeichnet, dass**
die Fahrtrajektorien (10) zusammen mit einem Fahrertyp eines Fahrers (6) des Kraftfahrzeugs (1) als externem Parameter bestimmt werden, und ein Clustering der Fahrtrajektorien (10) für mehrere Spurinformationen (15) mit verschiedenen Spurführungseigenschaften abhängig von dem Fahrertyp durchgeführt wird.

2. Verfahren nach Anspruch 1, **dadurch gekennzeichnet, dass** die Fahrtrajektorie (10) des Kraftfahrzeugs (1) auf der Fahrspur (8) durch eine Lokalisierungseinheit (2) des Kraftfahrzeugs (1) bestimmt wird.

3. Verfahren nach Anspruch 1 oder 2, **dadurch gekennzeichnet, dass** die Fahrtrajektorie (10) anhand eines Lenkwinkelverlaufs des Kraftfahrzeugs (1)bestimmt wird.

4. Verfahren nach einem der vorhergehenden Ansprüche, **dadurch gekennzeichnet, dass** beim Bestimmen der Fahrtrajektorie ein Zuverlässigkeitswert der Fahrtrajektorie auf Basis von Sensordaten des Kraftfahrzeugs, insbesondere im Kraftfahrzeug, bestimmt wird und die Spurinformation abhängig von dem Zuverlässigkeitswert bestimmt wird.

5. Verfahren nach einem der vorhergehenden Ansprüche,
**dadurch gekennzeichnet, dass**
die Fahrtrajektorie (10) zusammen mit einem Wetterzustand in einem Umgebungsbereich des Kraftfahrzeugs (1) während dem Bewegen des Kraftfahrzeugs (1) auf der Fahrspur (8) als dem externen Parameter bestimmt wird.

6. Verfahren nach einem der vorhergehenden Ansprüche,
**dadurch gekennzeichnet, dass**
die Spurinformation (15) dem weiteren Kraftfahrzeug (22) abhängig von einer aktuellen Position (24) des weiteren Kraftfahrzeugs (22) im fahrzeugexternen Bezugssystem (20) automatisch bereitgestellt wird, insbesondere die Spurinformation (15) dem weiteren Kraftfahrzeug (22) automatisch bereitgestellt wird, falls eine Entfernung (25) des weiteren Kraftfahrzeugs (22) zu der Fahrspur (8) kleiner als ein Entfernungsgrenzwert ist.

7. Verfahren nach einem der vorhergehenden Ansprüche,
**dadurch gekennzeichnet, dass**
die Spurinformation (15) für eine Querführung des weiteren Kraftfahrzeugs (22) beim Fahren des weiteren Kraftfahrzeugs (22) auf der Fahrspur (8) berücksichtigt wird.

8. Verfahren nach einem der vorhergehenden Ansprüche,
**dadurch gekennzeichnet, dass**
das weitere Kraftfahrzeug (22) abhängig von der Spurinformation (15) zumindest semi-autonom, insbesondere autonom hinsichtlich eines Lenkwinkels des weiteren Kraftfahrzeugs (22) und/oder hinsichtlich einer Position des weiteren Kraftfahrzeugs (22) auf der Fahrspur (8) betrieben wird.

9. System (16) mit zumindest einer Mehrzahl von Kraftfahrzeugen (1, 17) zum Bestimmen einer Fahrtrajektorie (10) des jeweiligen Kraftfahrzeugs (1, 17) auf einer Fahrspur (8),
und mit einer zentralen Spurinformations-Sammeleinrichtung (14), welche zum Empfangen einer Mehrzahl von bestimmten Fahrtrajektorien (10, 19) der Mehrzahl von Kraftfahrzeugen (1, 17) ausgebildet ist, wobei die Spurinformations-Sammeleinrichtung (14) zum Erzeugen einer Spurinformation (15) der Fahrspur (8) anhand der Mehrzahl von Fahrtrajektorien (10, 19) und zum Bereitstellen der erzeugten Spurinformation (15) für ein weiteres Kraftfahrzeug (22) ausgebildet ist, wobei das System (16) dazu ausgebitdet ist, die Spurinformation (15) einer Spurinformationskategorie einer Mehrzahl von vorbestimmten Spurinformationskategorien zuzuweisen, und eine Spurinformation (15) der jeweiligen Spurinformationskategorie dem weiteren Kraftfahrzeug (22) situationsabhängig durch die Spurinformations-Sammeleinrichtung (14) bereitzustellen,
**dadurch gekennzeichnet, dass**
die Fahrtrajektorien (10) zusammen mit einem Fahrertyp des Fahrers (6) des Kraftfahrzeugs (1) als externem Parameter bestimmt werden, und dass beim Zuweisen ein Clustering der Fahrtrajektorien (10) für mehrere Spurinformationen (15) mit verschiedenen Spurführungseigenschaften abhängig vom Fahrertyp durchgeführt wird.

## Claims

1. Method for providing lane information (15) of a lane (8) of a respective motor vehicle (1) in the case of which, while the motor vehicle (1) is moving to the lane (8), a plurality of travel trajectories (10, 19) of a plurality of motor vehicles (17) is determined in relation to a reference system (20) external to the vehicle, wherein the plurality of travel trajectories (10, 19) are transmitted to a central lane information collection device (14) external to the vehicle, the lane information (15) is determined on the basis of the plurality of travel trajectories (10, 19), the determined lane information (15) is provided to at least one further motor vehicle (22) by the lane information collection device (14), the lane information (15) is assigned to a lane information category of a plurality of predetermined lane information categories and lane information (15) of the respective lane information category is provided to the further motor vehicle (22) by the lane information collection device (14) depending on the situation, **characterised in that** the travel trajectories (10) are determined as an external parameter together with a driver type of a driver (6) of the motor vehicle (1) and a clustering of the travel trajectories (10) is performed for a plurality of lane information items (15) with different lane guidance properties depending on the driver type.

2. Method according to claim 1, **characterised in that** the travel trajectory (10) of the motor vehicle (1) in the lane (8) is determined by a localisation unit (2) of the motor vehicle (1).

3. Method according to claim 1 or 2, **characterised in that** the travel trajectory (10) is determined on the basis of a steering angle course of the motor vehicle (1).

4. Method according to any one of the preceding claims, **characterised in that** when the travel trajectory is determined, a reliability value of the travel trajectory is determined based on sensor data of the motor vehicle, in particular in the motor vehicle and the lane information is determined depending on the reliability value.

5. Method according to any one of the preceding claims, **characterised in that** the travel trajectory (10) is determined as the external parameter together with weather conditions in the surrounding area of the motor vehicle (1) while the motor vehicle (1) moves to the lane (8).

6. Method according to any one of the preceding claims, **characterised in that** the lane information (15) is automatically provided to the further motor vehicle (22) depending on a current position (24) of the further motor vehicle (22) in the reference system (20) external to the vehicle, in particular the lane information (15) is automatically provided to the further motor vehicle (22), if a distance (25) of the further motor vehicle (22) to the lane (8) is smaller than a distance limit value.

7. Method according to any one of the preceding claims, **characterised in that** the lane information (15) for transverse guidance of the further motor vehicle (22) is taken into account when the further vehicle (22) travels to the lane (8).

8. Method according to any one of the preceding claims, **characterised in that** the further vehicle (22) is operated depending on the lane information (15) at least semi-autonomously, in particular autonomously with respect to a steering angle of the further motor vehicle (22) and/or with respect to a position of the further motor vehicle (22) in the lane (8).

9. System (16) with at least a plurality of motor vehicles (1, 17) to determine a travel trajectory (10) of the respective motor vehicle (1, 17) in a lane (8), and with a central lane information collection device (14) which is designed to receive a plurality of determined travel trajectories (10, 19) of the plurality of motor vehicles (1, 17), wherein the lane information collection device (14) is designed to generate lane information (15) of the lane (8) on the basis of the plurality of travel trajectories (10, 19) and to provide the generated lane information (15) for a further motor vehicle (22), wherein the system (16) is designed to assign the lane information (15) to a lane information category of a plurality of predetermined lane information categories and to provide lane information (15) of the respective lane information category to the further motor vehicle (22) through the lane information collection device (14) depending on the situation, **characterised in that** the travel trajectories (10) are determined as an external parameter together with a driver type of the driver (6) of the motor vehicle (1) and **in that** during assignment, a clustering of the travel trajectories (10) is carried out for a plurality of lane information items (15) with different lane guidance properties depending on the driver type.

## Revendications

1. Procédé de fourniture d'informations de voie (15) d'une voie de circulation (8) d'un véhicule automobile (1) respectif, dans lequel, pendant que le véhicule automobile (1) est déplacé sur la voie de circulation (8), une pluralité de trajectoires de circulation (10, 19) d'une pluralité de véhicules automobiles (17) sont déterminées par rapport à un système de référence externe au véhicule (20), dans lequel
la pluralité de trajectoires de circulation (10, 19) sont transmises à un dispositif de collecte d'informations de voie (14) central externe au véhicule,
les informations de voie (15) sont déterminées au moins à l'aide de la pluralité de trajectoires de circulation (10, 19),
les informations de voie (15) déterminées sont fournies à au moins un autre véhicule automobile (22) par le dispositif de collecte d'informations de voie (14),
les informations de voie (15) sont attribuées à une catégorie d'informations de voie d'une pluralité de catégories d'informations de voie prédéterminées, et
des informations de voie (15) de la catégorie d'informations de voie respective sont fournies à l'autre véhicule automobile (22) en fonction de la situation par le dispositif de collecte d'informations de voie (14),
**caractérisé en ce que**
les trajectoires de circulation (10) sont déterminées conjointement avec un type de conducteur d'un conducteur (6) du véhicule automobile (1) en tant que paramètre externe, et
un regroupement des trajectoires de circulation (10) pour plusieurs informations de voie (15) avec différentes propriétés de guidage de voie est réalisé en fonction du type de conducteur.

2. Procédé selon la revendication 1,
**caractérisé en ce que**
la trajectoire de circulation (10) du véhicule automobile (1) sur la voie de circulation (8) est déterminée par une unité de localisation (2) du véhicule automobile (1).

3. Procédé selon la revendication 1 ou 2,
**caractérisé en ce que**
la trajectoire de circulation (10) est déterminée à l'aide d'une allure d'angle de braquage du véhicule automobile (1).

4. Procédé selon l'une quelconque des revendications précédentes,
**caractérisé en ce que**
lors de la détermination de la trajectoire de circulation, une valeur de fiabilité de la trajectoire de circulation est déterminée sur la base de données de capteur du véhicule automobile, en particulier dans le véhicule automobile, et les informations de voie sont déterminées en fonction de la valeur de fiabilité.

5. Procédé selon l'une quelconque des revendications précédentes,
**caractérisé en ce que**
la trajectoire de circulation (10) est déterminée conjointement avec une condition météo dans une zone environnante du véhicule automobile (1) pendant le déplacement du véhicule automobile (1) sur la voie de circulation (8) en tant que paramètre externe.

6. Procédé selon l'une quelconque des revendications précédentes,
**caractérisé en ce que**
les informations de voie (15) sont fournies automatiquement à l'autre véhicule automobile (22) en fonction d'une position actuelle (24) de l'autre véhicule automobile (22) dans le système de référence externe au véhicule (20), en particulier les informations de voie (15) sont fournies automatiquement à l'autre véhicule automobile (22) si une distance (25) entre l'autre véhicule automobile (22) et la voie de circulation (8) est inférieure à une valeur limite de distance.

7. Procédé selon l'une quelconque des revendications précédentes,
**caractérisé en ce que**
les informations de voie (15) sont prises en compte pour un guidage transversal de l'autre véhicule automobile (22) lors de la circulation de l'autre véhicule automobile (22) sur la voie de circulation (8).

8. Procédé selon l'une quelconque des revendications précédentes,
**caractérisé en ce que**
l'autre véhicule automobile (22) est exploité en fonction des informations de voie (15) au moins de manière semi-autonome, en particulier de manière autonome, en ce qui concerne un angle de braquage de l'autre véhicule automobile (22) et/ou en ce qui concerne une position de l'autre véhicule automobile (22) sur la voie de circulation (8).

9. Système (16) avec au moins une pluralité de véhicules automobiles (1, 17) pour la détermination d'une trajectoire de circulation (10) du véhicule automobile (1, 17) respectif sur une voie de circulation (8),
et avec un dispositif de collecte d'informations de voie (14) central, lequel est réalisé pour la réception d'une pluralité de trajectoires de circulation (10,19) déterminées de la pluralité de véhicules automobiles (1, 17), dans lequel le dispositif de collecte d'informations de voie (14) est réalisé pour la génération d'informations de voie (15) de la voie de circulation (8) à l'aide de la pluralité de trajectoires de circulation (10, 19) et pour la fourniture des informations de voie (15) générées pour un autre véhicule automobile (22), dans lequel
le système (16) est réalisé pour attribuer les informations de voie (15) d'une catégorie d'informations de voie à une pluralité de catégories d'informations de voie prédéterminées, et
fournir des informations de voie (15) de la catégorie d'informations de voie respective à l'autre véhicule automobile (22) en fonction de la situation par le dispositif de collecte d'informations de voie (14),
**caractérisé en ce que**
les trajectoires de circulation (10) sont déterminées conjointement avec un type de conducteur d'un conducteur (6) du véhicule automobile (1) en tant que paramètre externe, et que lors de l'attribution, un regroupement des trajectoires de circulation (10) pour plusieurs informations de voie (15) avec différentes propriétés de guidage de voie est réalisé en fonction du type de conducteur.
